# EUROPÄISCHE PATENTSCHRIFT

(11) **EP 1 319 107 B1**
(45) Veröffentlichungstag und Bekanntmachung des Hinweises auf die Patenterteilung: **29.06.2005**
(21) Anmeldenummer: 01972059.8
(22) Anmeldetag: 14.09.2001
(51) Int. Cl.: E04D 5/12, B32B 31/30

(54) **VERFAHREN UND HALBFERTIGPRODUKT ZUR HERSTELLUNG EINER SANIERUNGS-DACHBAHN**
METHOD AND SEMI-FINISHED PRODUCT FOR PRODUCING PREPARED ROOFING FOR RENEWING ROOFS
PROCEDE ET PRODUIT SEMI-FINI POUR UNE BANDE DE RENOVATION DE TOITURE

(30) Priorität: 19.09.2000 DE 10046259
(43) Veröffentlichungstag der Anmeldung: 18.06.2003
(73) Patentinhaber: Schillings, Hans, 41379 Brüggen (DE)
(72) Erfinder: Schillings, Hans, 41379 Brüggen (DE)
(74) Vertreter: Bonsmann, Manfred, Dipl.-Ing.
(86) Internationale Anmeldenummer: PCT/EP2001/010620
(87) Internationale Veröffentlichungsnummer: WO 2002/025030

(56) Entgegenhaltungen:
- EP-A- 0 441 114
- DE-U- 9 206 923
- FR-A- 2 350 540
- GB-A- 2 044 673
- US-A- 4 343 847
- US-A- 4 670 071
- US-A- 5 908 412

## Beschreibung

Die Erfindung betrifft ein Verfahren und ein Halbfertigprodukt zur Herstellung einer Sanierungs-Dachbahn mit Dampfdruckausgleichseinrichtungen, mit einem auf ein Flächengebilde auf der Basis von Bitumen unter Zwischenschaltung einer Kunststofffolie aufkaschierten, in Abständen verteilt angeordnete, von einer Flachseite zur anderen Flachseite durchgehend ausgebildete Öffnungen aufweisenden Flächengebilde auf der Basis von Glasvlies.

Ein solches Halbfertigprodukt und eine solche Sanierungs-Dachbahn sind aus US-A-4 670 071 bekannt.

Es ist bekannt, bestehende Dachabdeckungen dadurch zu sanieren, dass auf die vorhandene Dachabdeckung eine Sanierungs-Dachbahn aufgebracht wird. Eine solche Sanierungs-Dachbahn weist ein Flächengebilde auf der Basis von Glasvlies auf, dessen eine Flachseite unter Zwischenschaltung einer Kunststofffolie mit einem Flächengebilde auf der Basis von Bitumen verbunden ist. Das Flächengebilde auf der Basis von Glasvlies weist von einer Flachseite zur anderen Flachseite durchgehend ausgebildete Öffnungen auf. Die Montage der Sanierungs-Dachbahn erfolgt so, dass sie mit ihrer die dem Flächengebilde auf der Basis von Bitumen abgewandten Flachseite auf die Dachabdeckung aufgelegt wird. Anschließend wird von der das Flächengebilde auf der Basis von Bitumen aufweisenden Flachseite der Sanierungs-Dachbahn her Wärme aufgebracht, beispielsweise mittels eines Brenners, und zwar derart, dass die Sanierungs-Dachbahn mit der bestehenden Dachabdeckung verklebt bzw. verschmolzen wird. Durch die Einwirkung von Wärme wird das Flächengebilde auf der Basis von Bitumen teilweise flüssig. Die Kunststofffolie, welche die Öffnungen in dem Flächengebilde auf der Basis von Glasvlies überdeckt, schmilzt bei diesem Vorgang weg, so dass das Bitumen die Öffnungen durchdringen und sich fest mit der Oberfläche der zu sanierenden Dachabdeckung verbinden kann. Die Verbindung erfolgt lediglich im Bereich der Öffnungen und somit partiell und nicht vollflächig, derart, dass auf diese Weise ein Dampfdruckausgleich ermöglicht wird. Die Öffnungen in dem Flächengebilde auf der Basis von Glasvlies werden vor der Endfertigung in regelmäßigen Abständen ausgestanzt und haben beispielsweise die Größe von etwa 2,5 cm x 7 cm.

Es ist bekannt, zur Herstellung einer Sanierungs-Dachbahn der vorstehend genannten Art eine Kaschieranlage oder eine anderweitig ausgebildete Fertigungsanlage einzusetzen, wobei in die Anlage gleichzeitig oder nacheinander ein die Öffnungen aufweisendes Flächengebilde auf der Basis von Glasvlies, eine Kunststofffolie und ein Flächengebilde auf der Basis von Bitumen eingebracht und miteinander verbunden werden. Es hat sich herausgestellt, dass die Handhabung und das Einbringen einer dünnen Kunststofffolie in einer Kaschieranlage oder anderweitig ausgebildeten Fertigungsanlagen problematisch ist und oft zu Betriebsstörungen führt.

Der Erfindung liegt im wesentlichen die Aufgabe zugrunde, das bekannte Verfahren zur Herstellung einer Sanierungs-Dachbahn der eingangs genannten Art rationeller als bisher zu gestalten.

Diese Aufgabe wird erfindungsgemäß durch ein Verfahren gemäß Anspruch 1 gelöst.

Zur Lösung dieser Aufgabe ist erfindungsgemäß vorgesehen, dass eine mineralische Beschichtung auf die eine Flachseite des Flächengebildes auf der Basis von Glasvlies aufgebracht wird und die Kunststofffolie durch Auftragen von Kunststoff in schmelzflüssigem Zustand im Extrusions-Beschichtungsverfahren auf die andere Flachseite des mit Öffnungen versehenen Flächengebildes auf der Basis von Glasvlies aufgebracht wird, und dass das Flächengebilde auf der Basis von Bitumen auf die der aufgebrachten Kunststofffolie zugewandte Seite des Flächengebildes auf der Basis von Glasvlies aufkaschiert wird.

Das Aufbringen, der Kunststofffolie durch Auftragen von Kunststoff in schmelzflüssigem Zustand ist rationeller und preiswerter als das Einbringen einer Kunststofffolie in eine Kaschieranlage oder eine anderweitig ausgebildete Fertigungsanlage zur Herstellung von Sanierungs-Dachbahnen.

Im Hinblick auf die in dem Flächengebilde auf der Basis von Glasvlies vorgesehenen Öffnungen kann weiterhin erfindungsgemäß vorgesehen sein, dass während des Aufbringens der Kunststofffolie durch Auftragen von Kunststoff in schmelzflüssigem Zustand im Extrusions-Beschichtungsverfahren auf das mit Öffnungen versehene Flächengebilde der auf die der Aufbringseite des Kunststoffs gegenüberliegende Seite aufgebrachte Anpressdruck einen solchen Wert aufweist, dass kein Durchpressen des aufgebrachten Kunststoffes durch die Öffnungen erfolgt.

In weiterer Ausgestaltung der Erfindung kann vorgesehen sein, dass auf das mit Öffnungen versehene Flächengebilde als Kunststofffolie eine Polyethylenschicht mit einem Flächengewicht im Bereich von 15 g/m² bis 50 g/m² aufgebracht wird. Die Dichte des im Extrusionsverfahren aufgebrachten Polyethylens liegt vorzugsweise im Bereich von 0,915 g/cm³ bis 0,960 g/cm³.

In weiterer Ausgestaltung der Erfindung kann vorgesehen sein, dass die im schmelzflüssigen Zustand im Extrusions-Beschichtungsverfahren aufzubringende Kunststofffolie über wenigstens eine Seitenkante des Flächengebildes auf der Basis von Glasvlies hinaus vorstehend aufgebracht wird, derart, dass hierdurch ein Überstand der Kunststofffolie über den Rand des Flächengebildes auf der Basis von Glasvlies hinaus entsteht. Ein solcher überstand bringt Vorteile bei der Verlegung durch eine zusätzliche sichere Überlappung der einzelnen Bahnen mit sich.

Da herkömmliche Extrusions-Beschichtungsanlagen nur für die Beschichtung von vollflächig ausgebildeten Trägermaterialien ausgelegt sind, ist in weiterer Ausgestaltung im Hinblick auf die in dem Flächengebilde auf der Basis von Glasvlies vorgesehenen Öffnungen vorgesehen, dass die Andruckwalze einer bei dem Extrusions-Beschichtungsverfahren eingesetzten Laminiervorrichtung eine Antihaftbeschichtung aufweist.

In zweckmäßiger Ausgestaltung dieses Merkmals kann vorgesehen sein, dass die Andruckwalze als mit einem Schlauch auf der Basis von Polytetrafluorethylen überzogene Gummiwalze ausgebildet ist. Alternativ kann vorgesehen sein, dass die Andruckwalze als mit einem Band auf der Basis von Polytetrafluorethylen überklebte Gummiwalze ausgebildet ist.

Gemäß der Erfindung ist vorgesehen, dass das Flächengebilde auf der Basis von Glasvlies auf seiner der Kunststofffolie abgewandten Flachseite einen Antihaftauftrag aufweist, der als mineralische Beschichtung ausgebildet ist.

Die Erfindung betrifft weiterhin ein Halbfertigprodukt gemäß Anspruch 9.

Die Erfindung wird nachfolgend anhand der Zeichnungen beispielhaft näher erläutert. Es zeigen:
- Fig. 1: eine schematische Draufsicht auf ein Ausführungsbeispiel eines erfindungsgemäßen Halbfertigproduktes zur Herstellung einer Sanierungs-Dachbahn;
- Fig. 2: eine Schnittdarstellung entsprechend der Schnittlinie II-II in Fig. 1 in vergrößertem Maßstab;
- Fig. 3: eine schematische Schnittdarstellung durch eine auf eine bestehende Dachabdeckung aufgelegte Sanierungs-Dachbahn, die aber noch nicht mit der bestehenden Dachabdeckung verklebt bzw. verschmolzen ist.

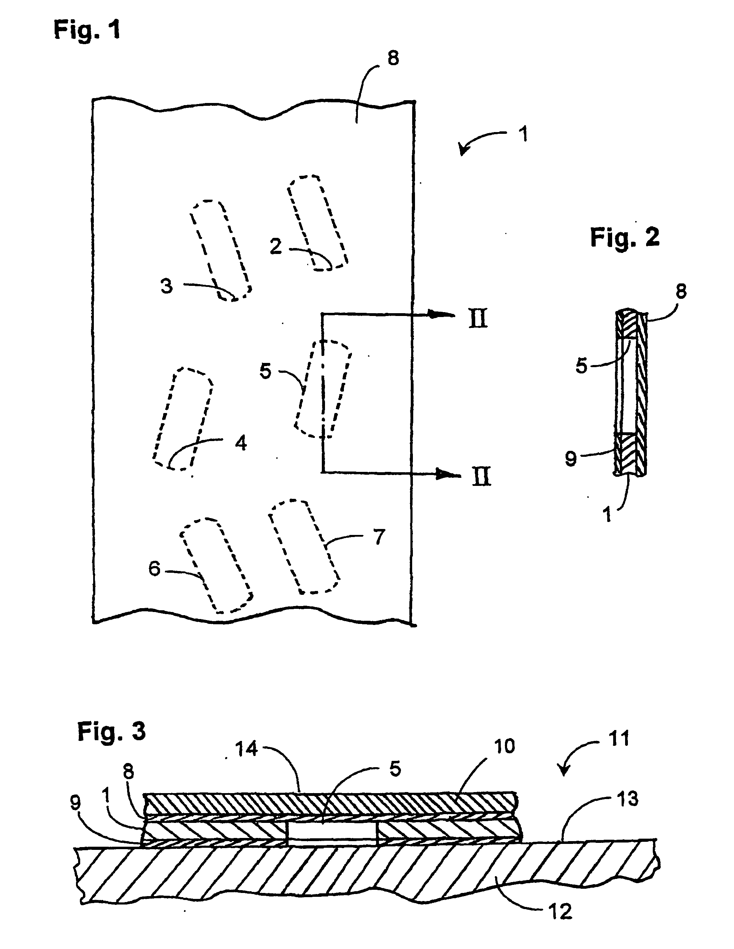

Fig. 1 zeigt eine Draufsicht auf ein Halbfertigprodukt gemäß der Erfindung. Ein Flächengebilde 1 auf der Basis von Glasvlies weist in Abständen verteilt angeordnete, von einer Flachseite zur anderen durchgehend ausgebildete Öffnungen 2, 3, 4, 5, 6, 7 auf. Eine der beiden Flachseiten ist fest mit einer Kunststofffolie 8 verbunden, die auch die Öffnungen 2 bis 7 überdeckt. Die der Kunststofffolie 8 gegenüberliegende Flachseite des Flächengebildes 1 auf der Basis von Glasvlies weist eine mineralische Beschichtung 9 auf. Die Kunststofffolie 8 ist durch Auftragen von Kunststoff in schmelzflüssigem Zustand im Extrusions-Beschichtungsverfahren auf das mit Öffnungen versehene Flächengebilde 1 aufgebracht worden, und zwar so, dass auch die Öffnungen 5 bis 7 von der Kunststofffolie 8 überdeckt werden.

Der Gegenstand gemäß Fig. 1 bzw. Fig. 2 ist ein Halbfertigprodukt. Zur Herstellung einer Sanierungs-Dachbahn wird auf die Kunststofffolie 8 ein Flächengebilde 10 auf der Basis von Bitumen aufgebracht. Auf diese Weise entsteht eine insgesamt mit 11 bezeichnete Sanierungs-Dachbahn, die zur Sanierung einer bestehenden Dachabdeckung 12 (Fig. 3) auf deren Oberfläche 13 mit der die mineralische Beschichtung 9 aufweisenden Flachseite aufgebracht wird. Die Befestigung der Sanierungs-Dachbahn 11 auf der Oberfläche 13 erfolgt dadurch, dass der Sanierungs-Dachbahn 11 von ihrer mit 14 bezeichneten Oberfläche aus Wärme bzw. Hitze (beispielsweise durch einen Brenner) zugeführt wird. Durch diese Wärme bzw. Hitze wird die Kunststofffolie 8 im Bereich der Öffnung 5 zerstört, und aus dem Flächengebilde 10 auf der Basis von Bitumen austretendes heißes und flüssiges Bitumen dringt durch die Öffnung 5 (und natürlich auch durch die anderen Öffnungen), so dass die Sanierungs-Dachbahn im Bereich der Öffnungen fest mit der Oberfläche 13 der zu sanierenden Abdeckung 12 verklebt bzw. verschmolzen wird.

Die Dickenabmessungen der Einzelkomponenten gemäß Fig. 2 und Fig. 3 relativ zueinander sind lediglich zur Verdeutlichung der zeichnerischen Darstellung gewählt und entsprechen nicht den tatsächlichen Verhältnissen.

## Patentansprüche

1. Verfahren zur Herstellung einer Sanierungs-Dachbahn (11) mit Dampfdruckausgleichseinrichtungen, mit einem auf ein Flächengebilde (10) auf der Basis von Bitumen unter Zwischenschaltung einer Kunststofffolie (8) aufkaschierten, in Abständen verteilt von einer Flachseite zur anderen Flachseite durchgehend ausgebildete Öffnungen (2, 3, 4, 5, 6, 7) aufweisenden Flächengebilde (1) auf der Basis von Glasvlies, wobei eine mineralische Beschichtung (9) auf die eine Flachseite des Flächengebildes (1) auf der Basis von Glasvlies aufgebracht wird und die Kunststofffolie (8) durch Auftragen von Kunststoff in schmelzflüssigem Zustand im Extrusions-Beschichtungsverfahren auf die andere Flachseite des mit Öffnungen versehenen Flächengebildes (1) auf der Basis von Glasvlies aufgebracht wird, und wobei das Flächengebilde (10) auf der Basis von Bitumen auf die der aufgebrachten Kunststofffolie (8) zugewandte Seite des Flächengebildes (1) auf der Basis von Glasvlies aufkaschiert wird.

2. Verfahren nach Anspruch 1, **dadurch gekennzeichnet, dass** während des Aufbringens der Kunststofffolie (8) durch Aufbringen von Kunststoff in schmelzflüssigem Zustand im Extrusions-Beschichtungsverfahren auf das mit Öffnungen versehene Flächengebilde (1) der auf die der Aufbringseite des Kunststoffs gegenüberliegenden Seite aufgebrachte Anpressdruck einen solchen Wert aufweist, dass kein Durchpressen des aufgebrachten Kunststoffs durch die Öffnungen (2, 3, 4, 5, 6, 7) erfolgt.

3. Verfahren nach Anspruch 1 oder 2, **dadurch gekennzeichnet, dass** die im schmelzflüssigem Zustand im Extrusions-Beschichtungsverfahren aufzubringende Kunststofffolie an einer Längsseite oder an beiden Längsseiten des Flächengebildes (1) hinaus vorstehend aufgebracht wird (vorzugsweise ca. 15 cm).

4. Verfahren nach einem der Ansprüche 1 bis 3, **dadurch gekennzeichnet, dass** auf das mit Öffnungen versehene Flächengebilde eine Polyethylenschicht mit einem Flächengewicht etwa im Bereich zwischen 15 g/m² bis 50 g m² aufgebracht wird.

5. Verfahren nach einem der Ansprüche 1 bis 4, **dadurch gekennzeichnet, dass** die Dichte des im Extrusionsverfahren aufgebrachten Polyethylens etwa im Bereich zwischen 0,915 g/cm³ bis 0,960 g/cm³ liegt.

6. Verfahren nach einem der Ansprüche 1 bis 5, **dadurch gekennzeichnet, dass** die Andruckwalze einer bei dem Extrusions-Beschichtungsverfahren eingesetzten Laminiervorrichtung eine Antihaftbeschichtung aufweist.

7. Verfahren nach Anspruch 6, **dadurch gekennzeichnet, dass** die Andruckwalze als mit einem Schlauch auf der Basis von Polytetrafluorethylen überzogene Gummiwalze ausgebildet ist.

8. Verfahren nach Anspruch 6, **dadurch gekennzeichnet, dass** die Andruckwalze als mit einem Band auf der Basis von Polytetrafluorethylen überklebte Gummiwalze ausgebildet ist.

9. Halbfertigprodukt zur Herstellung einer Sanierungs-Dachbahn (11) zur Sanierung bestehender Dachabdeckungen (12) od. dgl., vorzugsweise zur Verwendung in einem Verfahren gemäß einem der Ansprüche 1 bis 5 mit einer ersten, das Halbfertigprodukt bildenden Teil-Warenbahn, welche ein Flächengebilde (1) auf der Basis von Glasvlies mit in Abständen verteilt angeordneten, von einer Flachseite des Flächengebildes (1) zur anderen durchgehend ausgebildeten Öffnungen (2, 3, 4, 5, 6, 7) aufweist, mit deren einer Flachseite zur Erstellung der Sanierungs-Dachbahn eine zweite Teil-Warenbahn in Form eines Flächengebildes (10) auf der Basis von Bitumen unter Zwischenschaltung einer Kunststofffolie (8) fest verbunden wird, **dadurch gekennzeichnet, dass** die Kunststofffolie (8) auf einer Flachseite des Flächengebildes (1) auf der Basis von Glasvlies durch Auftragen von Kunststoff in schmelzflüssigem Zustand im Extrusions-Beschichtungsverfahren fest aufgebracht ist, und dass die der Flachseite des Flächengebildes (1) mit aufgebrachter Kunststofffolie (8) gegenüberliegende Flachseite eine mineralische Beschichtung (9) aufweist.

10. Halbfertigprodukt nach Anspruch 9, **dadurch gekennzeichnet, dass** die Kunststofffolie (8) über wenigstens eine Seitenkante des Flächengebildes (1) auf der Basis von Glasvlies vorstehend ausgebildet ist.

## Claims

1. A process for the production of a roof renovation web (11) with vapour pressure equalisation devices, comprising a flat sheet (1) based on non-woven glass cloth, which is laminated on to a flat sheet (10) based on bitumen with the interposition of a plastic material film (8) and which has openings (2, 3, 4, 5, 6, 7) provided in distributed relationship at spacings and extending therethrough from one flat side to the other flat side, wherein a mineral coating (9) is applied to the one flat side of the sheet (1) based on non-woven glass cloth and the plastic material film (8) is applied to the other flat side of the sheet (11) having openings and based on non-woven glass cloth by the application of plastic material in a molten condition in an extrusion coating process, and wherein the sheet (10) based on bitumen is laminated on to the side, which is towards the applied plastic material film (8), of the sheet (1) based on non-woven glass cloth.

2. A process according to claim 1 **characterised in that** during application of the plastic material film (8) by applying plastic material in the molten condition in the extrusion coating process to the sheet (1) provided with openings the pressing pressure applied to the side in opposite relationship to the side at which the plastic material is applied is of such a value that the applied plastic material is not pressed through the openings (2, 3, 4, 5, 6, 7).

3. A process according to claim 1 or claim 2 **characterised in that** the plastic material film to be applied in the molten condition in the extrusion coating process is applied in projecting relationship (preferably about 15 cm) at one longitudinal side or at both longitudinal sides of the sheet (1).

4. A process according to one of claims 1 to 3 **characterised in that** applied to the sheet provided with openings is a polyethylene layer of a weight in relation to surface area approximately in the range of between 15 g/m² and 50 g/m².

5. A process according to one of claims 1 to 4 **characterised in that** the density of the polyethylene applied in the extrusion process is approximately in the range of between 0.915 g/cm³ and 0.960 g/cm³.

6. A process according to one of claims 1 to 5 **characterised in that** the pressure roller of a laminating apparatus used in the extrusion coating process has an anti-adhesion coating.

7. A process according to claim 6 **characterised in that** the pressure roller is in the form of a rubber roller coated with a polytetrafluoroethylene-based tube.

8. A process according to claim 6 **characterised in that** the pressure roller is in the form of a rubber roller over which is stuck a polytetrafluoroethylene-based band.

9. A semimanufactured product for the production of a roof renovation web (11) for the renovation of existing roof coverings (12) or the like, preferably for use in a process according to one of claims 1 to 5 comprising a first web portion which forms the semimanufactured product and which has a flat sheet (1) based on non-woven glass cloth with openings (2, 3, 4, 5, 6, 7) arranged in distributed relationship at spacings and extending through the sheet (1) from one flat side thereof to the other and to the one flat side of which, to produce the roof renovation web, a second web portion in the form of a flat sheet (10) based on bitumen is fixedly joined with the interposition of a plastic film (8), **characterised in that** the plastic material film (8) is fixedly applied to a flat side of the sheet (1) based on non-woven glass cloth by the application of plastic material in a molten condition in an extrusion coating process, and the flat side of the sheet (1), which is in opposite relationship to the flat side thereof with the applied plastic material film (8), has a mineral coating (9).

10. A semimanufactured product according to claim 9 **characterised in that** the plastic material film (8) is provided in projecting relationship beyond at least one side edge of the flat sheet (1) based on non-woven glass cloth.

## Revendications

1. Procédé de fabrication d'une bande de rénovation de toiture (11) pourvue de dispositifs d'égalisation de la pression de vapeur, avec un élément de surface (1) à base de toison de fibres de verre comportant des ouvertures (2, 3, 4, 5, 6, 7) formées de façon à être réparties à distance les unes des autres et à traverser d'un côté plat à l'autre côté plat, contrecollé sur un élément de surface (10) à base de bitumes en intercalant une feuille de plastique (8), dans lequel un revêtement minéral (9) est déposé sur l'un des côtés plats de l'élément de surface (1) à base de toison de fibres de verre, la feuille de plastique (8) étant déposée par application de matière plastique à l'état fondu selon un procédé de couchage par extrusion sur l'autre c ôté plat de l'élément de surface (1) à base de toison de fibres de verre pourvu des ouvertures, et dans lequel l'élément de surface (10) à base de bitumes est contrecollé sur la face de l'élément de surface (1) à base de toison de fibres de verre orientée vers la feuille de plastique (8) appliquée.

2. Procédé selon la revendication 1, **caractérisé en ce qu'**au cours de l'application de la feuille de plastique (8) par application de matière plastique à l'état fondu dans le procédé de couchage par extrusion sur l'élément de surface (1) pourvu des ouvertures, la pression d'appui exercée sur la face opposée à celle enduite de matière plastique présente une valeur telle que la matière plastique déposée, sous l'effet de la pression, n'est pas poussée à travers les ouvertures (2, 3, 4, 5, 6, 7).

3. Procédé selon la revendication 1 ou 2, **caractérisé en ce que** la feuille de plastique à déposer à l'état fondu dans le procédé de couchage par extrusion est déposée sur un grand côté, ou sur les deux grands côtés, de l'élément de surface (1) de façon à saillir vers l'extérieur (de préférence d'environ 15 cm).

4. Procédé selon l'une des revendications 1 à 3, **caractérisé en ce qu'**une couche de polyéthylène est déposée sur l'élément de surface pourvu d'ouvertures, dont le grammage est compris dans la gamme d'environ 15 g/m² à 50 g/m².

5. Procédé selon l'une des revendications 1 à 4, **caractérisé en ce que** la masse volumique du polyéthylène déposé selon un procédé d'extrusion est comprise dans la gamme d'environ 0,915 g/cm³ à 0,960 g/cm³.

6. Procédé selon l'une des revendications 1 à 5, **caractérisé en ce que** le rouleau de pression d'un dispositif de contre-collage utilisé dans le procédé de couchage par extrusion comporte un revêtement antiadhérent.

7. Procédé selon la revendication 6, **caractérisé en ce que** le rouleau de pression se présente sous la forme d'un rouleau de caoutchouc recouvert d'un tube souple à base de polytétrafluoréthylène.

8. Procédé selon la revendication 6, **caractérisé en ce que** le rouleau de pression se présente sous la forme d'un rouleau de caoutchouc sur lequel est collé un ruban à base de polytétrafluoréthylène.

9. Produit semi-fini pour la fabrication d'une bande de rénovation de toiture (11) pour rénover des toitures existantes (12) ou équivalents, de préférence à utiliser dans un procédé selon l'une des revendications 1 à 5, avec une première bande partielle de matériau constituant le produit semi-fini qui comprend un élément de surface (1) à base de toison de fibres de verre pourvu d'ouvertures (2, 3, 4, 5, 6, 7) formées de façon à être réparties à distance les unes des autres et à traverser d'un côté plat à l'autre côté plat l'élément de surface (1), dont l'un des côtés plats, pour former la bande de rénovation de toiture, est solidement raccordé à une seconde bande partielle de matériau sous forme d'un élément de surface (10) à base de bitumes en intercalant une feuille de plastique (8), **caractérisé en ce que** la feuille de plastique (8) est fixée par application de matière plastique à l'état fondu selon un procédé de couchage par extrusion sur un côté plat de l'élément de surface (1) à base de toison de fibres de verre et **en ce que** le côté plat opposé au plat de l'élément de surface (1) revêtu de la feuille de plastique (8) comporte un revêtement minéral (9).

10. Produit semi-fini selon la revendication 9, **caractérisé en ce que** la feuille de plastique (8) est conçue de façon à dépasser sur au moins un bord latéral de l'élément de surface (1) à base de toison de fibres de verre.
